# FASCICULE DE BREVET EUROPEEN

(11) **EP 2 690 734 B1**
(45) Date de publication et mention de la délivrance du brevet: **25.03.2015**
(21) Numéro de dépôt: 13177608.0
(22) Date de dépôt: 23.07.2013
(51) Int. Cl.: H02G 3/22

(54) **Joint d'étanchéité pour le passage de câbles**
Dichtungsfuge für Kabeldurchführung
Seal for a cable run

(30) Priorité: 23.07.2012 FR 1202080
(43) Date de publication de la demande: 29.01.2014
(73) Titulaire: Société d'Exploitation des Procédés Maréchal S.E.P.M., 94410 Saint Maurice (FR)
(72) Inventeur: Houir Alami, Mounim, 75017 PARIS (FR)
(74) Mandataire: Milien, Jean-Baptiste Aurélien

(56) Documents cités:
- WO-A2-2011/042128
- DE-C1- 4 109 206
- DE-U1-202004 005 976
- US-A- 5 736 677
- US-B1- 7 049 515

## Description

La présente invention concerne un joint d'étanchéité pour le passage étanche d'au moins un câble électrique d'un côté à l'autre d'une paroi, et plus particulièrement un tel joint comportant des surfaces périphériques d'engagement étanche avec une surface intérieure d'un orifice ménagé dans ladite paroi et au moins une gorge longitudinale traversante pour le passage dudit câble.

Par longitudinal, on entend ici et dans ce qui suit la direction du câble lorsqu'il est installé dans la gorge. Cette direction est généralement perpendiculaire à la paroi précitée. Une direction transversale est une direction perpendiculaire à cette direction longitudinale. Le plan de la paroi traversée est donc généralement transversal.

On connaît des joints d'étanchéité du type rappelé ci-dessus, utilisés par exemple pour faire pénétrer de façon étanche des câbles à l'intérieur d'un coffret électrique. Ces joints sont réalisés en deux parties, de même que la paroi. Dans le cas d'un coffret, il s'agit par exemple d'un boîtier et de son couvercle. Le ou les plans longitudinaux de séparation entre les deux parties du joint divisent chaque gorge en deux demi gorges.

Le montage s'effectue en plaçant chaque partie du joint dans sa partie de paroi respective, puis en insérant chaque câble dans une des demi-gorges du joint qui lui est destinée. Les deux parties de la paroi sont alors assemblées de manière à reconstituer à la fois la paroi et le joint.

Un tel agencement présente toutefois des inconvénients.

En premier lieu, la fabrication du joint nécessite deux moules et deux opérations de moulage.

Par ailleurs, le montage de l'ensemble, par exemple du coffret électrique, est relativement compliqué, les câbles devant être maintenus en place jusqu'à ce que l'assemblage soit finalisé.

Enfin, les risques d'un défaut d'étanchéité sont accrus dans le cas d'un joint en deux parties.

WO 2011/042128 divulgue un joint tel que défini par le préambule de la revendication 1.

L'invention vise à pallier les inconvénients précités.

Plus particulièrement, l'invention a pour but de fournir un joint d'une seule pièce pour le passage étanche d'au moins un câble électrique d'un côté à l'autre d'une paroi, notamment dans le cas d'un coffret électrique.

A cet effet, l'invention a tout d'abord pour objet un joint d'étanchéité pour le passage étanche d'au moins un câble électrique d'un côté à l'autre d'une paroi, comportant des surfaces périphériques d'engagement étanche avec une surface intérieure d'un orifice ménagé dans ladite paroi et au moins une gorge longitudinale traversante pour le passage dudit câble, ce joint
- étant réalisé dans un matériau déformable ;
- comprenant une fente longitudinale reliant une desdites surfaces périphériques à l'intérieur de ladite gorge pour l'insertion dudit câble à l'intérieur de la gorge ;
- étant muni de moyens d'étanchéité extérieurs à la gorge pour assurer l'étanchéité entre la gorge et le câble lorsque ce dernier est installé dans la gorge,
- dans lequel lesdits moyens d'étanchéité comprennent une lèvre d'étanchéité transversale en forme de languette ayant une première partie terminale solidaire du joint d'un côté de ladite fente et une deuxième partie terminale libre, une partie médiane de ladite lèvre d'étanchéité, située entre ses parties terminales, recouvrant une section d'extrémité longitudinale de ladite fente dans la zone où ladite fente débouche dans la gorge.

On entend par déformable, un matériau qui présente la souplesse et l'élasticité permettant l'ouverture de la fente pour la mise en place du câble dans la gorge, ainsi que la déformation de la lèvre d'étanchéité dont il sera question ci-après.

L'invention présente un certain nombre d'avantages par rapport à l'état de la technique.

En premier lieu, le joint peut être réalisé d'une seule pièce puisque chaque câble est mis en place dans la gorge qui lui correspond en le glissant par les fentes prévues à cet effet.

Par ailleurs, le montage est simplifié, les câbles étant installés dans le joint avant que ce dernier soit monté sur la paroi, par exemple avant que le couvercle du coffret soit assemblé au boîtier.

Dans un mode de réalisation particulier, ladite fente présente, en l'absence de contraintes exercées sur le joint, une section transversale en V, évasée depuis la gorge dans la direction de ladite surface périphérique.

Egalement dans un mode de réalisation particulier, ladite fente débouche dans ladite gorge sensiblement tangentiellement à la surface intérieure de la gorge.

Plus particulièrement, ladite première partie terminale de la lèvre d'étanchéité peut être solidaire du joint du côté de la gorge opposé au côté où ladite fente débouche dans la gorge.

Plus particulièrement, ladite lèvre d'étanchéité peut être réalisée d'une seule pièce avec le joint.

L'invention a également pour objet un coffret électrique, comprenant un joint d'étanchéité tel que décrit ci-dessus, disposé dans un orifice ménagé dans une de ses parois.

Dans un mode de réalisation particulier, ladite lèvre d'étanchéité est disposée du côté de la section d'extrémité de ladite fente, extérieure au coffret.

On décrira maintenant, à titre d'exemple non limitatif, un mode de réalisation de l'invention pour le passage de deux câbles, en référence aux dessins schématiques annexés dans lesquels :
- la figure 1 est une vue en perspective d'un joint d'étanchéité et d'une portion de boîtier de coffret électrique selon l'invention ;
- la figure 2a est une vue arrière d'un joint d'étanchéité selon l'invention, dont une partie délimitée par une des fentes et le plan vertical n'a pas été représentée ;
- la figure 2b est une vue en perspective de ce joint après une première étape de montage d'un coffret électrique selon l'invention ;
- la figure 3 est une représentation en perspective d'une deuxième étape du montage d'un coffret électrique selon l'invention ;
- la figure 4 est une représentation en perspective d'une troisième étape du montage d'un coffret électrique selon l'invention ;
- la figure 5 est une vue de face d'une quatrième étape du montage d'un coffret électrique selon l'invention ;
- la figure 6 est une représentation en perspective d'une cinquième et dernière étape du montage d'un coffret électrique selon l'invention ;
- la figure 7 est une vue de face d'un coffret électrique selon l'invention une fois monté ; et
- la figure 8 est un schéma illustrant en vue de face le fonctionnement des lèvres d'étanchéité du joint d'étanchéité selon l'invention. Sur cette figure, le joint est représenté dans son état comprimé, mais sans le coffret qui assure sa compression. L'une des lèvres n'a également pas été représentée.

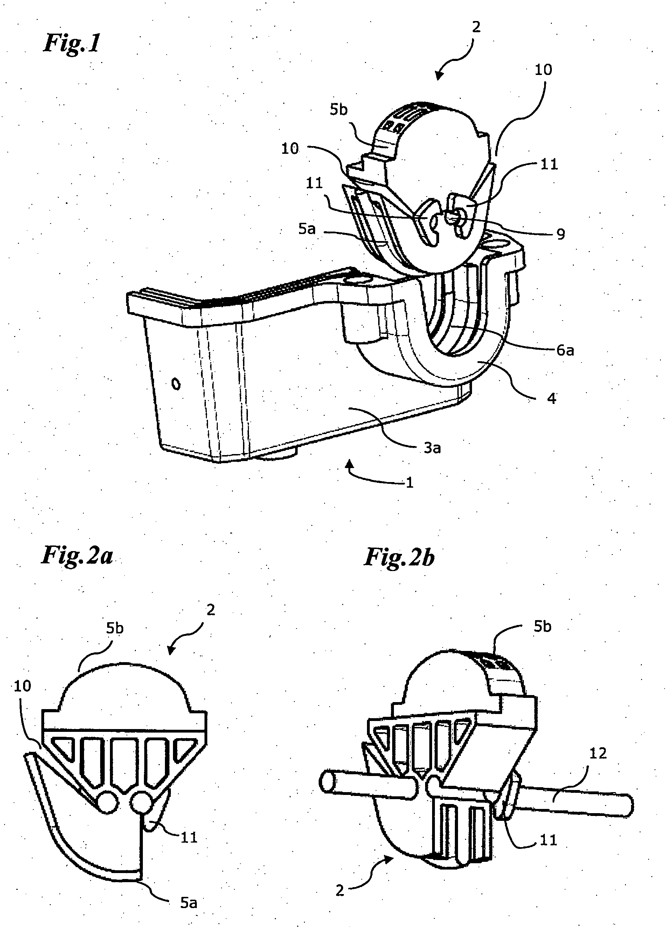

On voit à la figure 1 une portion du boîtier 1 d'un coffret électrique rigide, ainsi qu'un joint d'étanchéité 2 en matériau déformable. Le boîtier 1 possède une paroi 3a munie d'une encoche 4 destinée à recevoir la partie inférieure du joint d'étanchéité 2. A cet effet, la partie inférieure 5a de la surface périphérique du joint d'étanchéité 2 possède des reliefs complémentaires de reliefs de la surface intérieure 6a de l'encoche 4, de manière à pouvoir maintenir le joint d'étanchéité 2 longitudinalement dans l'encoche 4, de façon étanche.

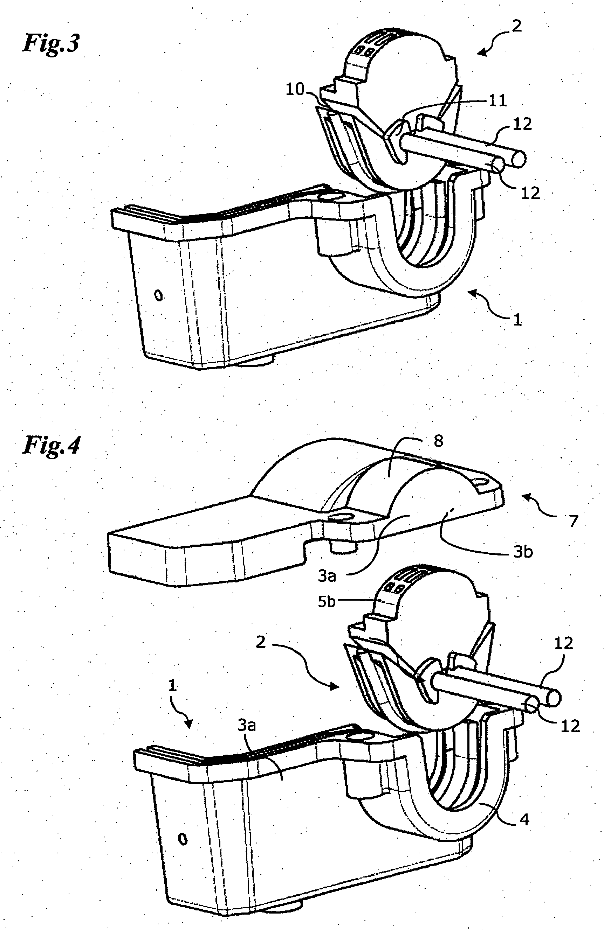

De façon similaire, le couvercle 7 du coffret électrique (figure 4) forme un logement 8 pour la partie supérieure du joint d'étanchéité 2. Le logement 8 comporte une paroi 3b transversale destinée également à maintenir le joint d'étanchéité 2 longitudinalement dans l'orifice formé par l'encoche 4 et le logement 8. La partie supérieure 5b de la surface périphérique du joint d'étanchéité 2 est agencée pour coopérer avec la surface intérieure du logement 8 pour assurer l'étanchéité.

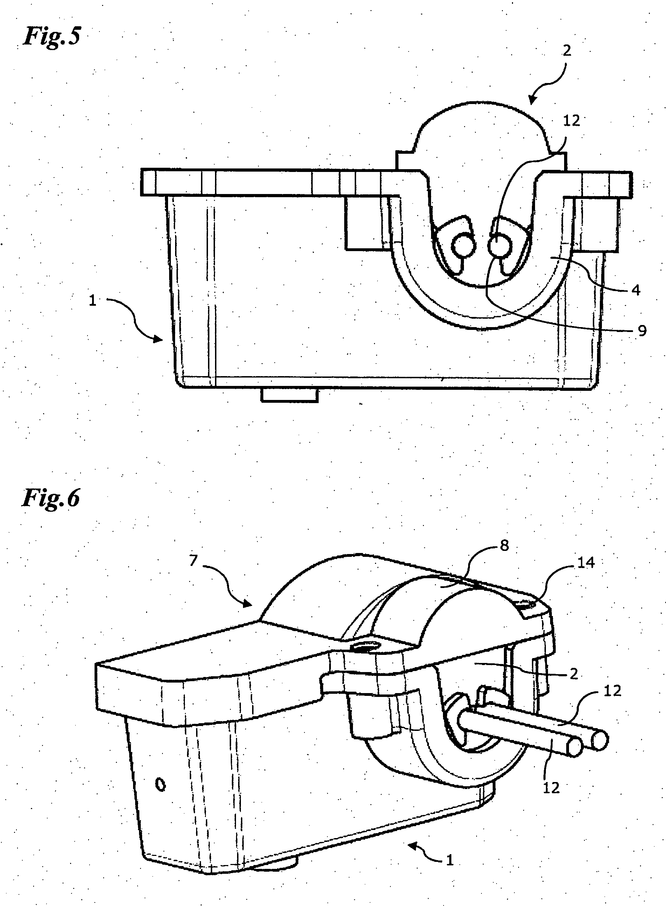

Si l'on revient à la figure 1, on voit que le joint d'étanchéité 2 possède deux gorges longitudinales traversantes 9 (voir également la figure 5) destinées chacune au passage d'un câble électrique. Une fente longitudinale 10 relie l'intérieur de chaque gorge 9 à la surface périphérique du joint d'étanchéité 2, sensiblement dans la zone de liaison entre les parties inférieure 5a et supérieure 5b de cette surface périphérique.

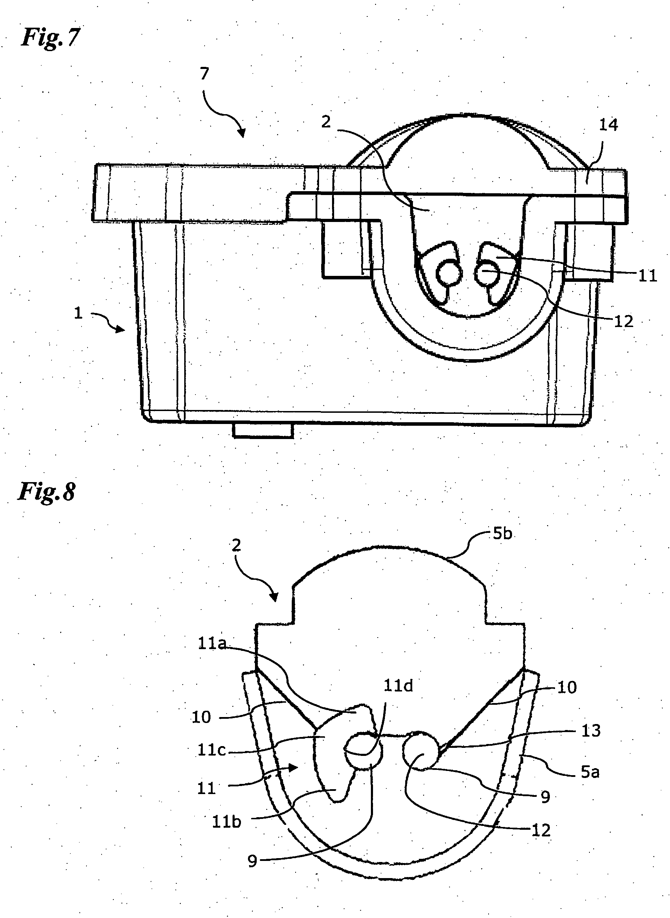

Chaque fente 10 possède, en l'absence de contraintes exercées sur le joint, une section transversale en V, évasée depuis la gorge 9 dans la direction de la surface périphérique 5a, 5b. Comme cela apparaît plus particulièrement à la figure 8, chaque fente 10 débouche dans la gorge 9 respective sensiblement tangentiellement à la surface intérieure de la gorge 9.

Chaque gorge 9 est munie à une de ses extrémités longitudinales d'une lèvre d'étanchéité transversale 11. Comme cela apparaît plus nettement à la figure 8, chaque lèvre d'étanchéité 11 forme une languette dont une première partie terminale 11 a est solidaire du joint d'étanchéité 2, ici du côté de la gorge 9 opposé au côté où la fente 10 débouche dans la gorge, et dont la deuxième partie terminale 11b est libre. La partie médiane 11c de la lèvre d'étanchéité 11 recouvre l'extrémité de la fente 10 dans la zone où cette dernière débouche dans la gorge 9. La partie médiane 11c de la lèvre d'étanchéité 11, située entre ses deux parties terminales, possède au voisinage de la gorge 9 une forme circulaire 11d correspondant à la forme de la gorge de manière à entourer le câble logé dans la gorge et à assurer l'étanchéité comme cela sera décrit ci-après.

Les lèvres d'étanchéité 11 sont de préférence réalisées d'une seule pièce par moulage avec le joint d'étanchéité 2. La deuxième partie terminale 11b peut donc se décoller de la surface du joint du fait de la déformabilité de son matériau constitutif.

Si l'on se réfère maintenant à la figure 2b, on voit que le montage débute par l'installation d'un premier câble 12 dans la gorge 9 correspondante. Cette installation s'effectue en écartant les faces en vis-à-vis de la fente 10, en glissant le câble 12 dans la fente 10, en dégageant la partie terminale libre 11b de la lèvre d'étanchéité 11 pour permettre le passage du câble 12, en engageant le câble 12 dans la gorge 9, et en laissant la partie terminale libre 11b de la lèvre d'étanchéité 11 se remettre en place en entourant le câble 12 du fait de la découpe circulaire 11d.

La figure 3 montre l'installation du deuxième câble 12 qui s'effectue de la même manière.

La figure 4 montre le joint d'étanchéité 2 équipé des deux câbles 12 positionné pour son assemblage dans l'orifice ménagé par les parois 3a du boîtier 1 et 3b du couvercle 7.

Comme montré à la figure 5, le joint d'étanchéité 2 équipé des deux câbles 12 est mis en place dans l'encoche 4 du boîtier 1 avec les reliefs de surfaces 5a et 6a en correspondance. Cette mise en place est effectuée avec les lèvres d'étanchéité 11 à l'extérieur du boîtier 1. On voit à la figure 8 que le joint d'étanchéité 2 est alors comprimé, de sorte que les faces en vis-à-vis des fentes 10 s'appliquent les unes contre les autres. Il reste néanmoins un interstice 13 au voisinage du câble 12 (partie droite de la figure 8 où la lèvre d'étanchéité 11 n'a pas été représentée), interstice qui est obturé par la lèvre d'étanchéité 11. La compression du joint a également pour effet de refermer le diamètre intérieur de chaque gorge 9 qui enserre ainsi chaque câble 12.

Comme montré à la figure 6, le couvercle 7 est alors mis en place, avec le logement 8 qui enferme la partie supérieure du joint d'étanchéité 2. Le couvercle 7 est par exemple maintenu par vissage grâce à des trous 14 prévus à cet effet dans le boîtier 1 et le couvercle 7.

On observera que le nombre de câbles peut être supérieur à deux. Ces câbles peuvent également être de diamètres différents.

## Revendications

1. Joint d'étanchéité (2) pour le passage étanche d'au moins un câble électrique (12) d'un côté à l'autre d'une paroi (3a, 3b), comportant des surfaces périphériques (5a, 5b) d'engagement étanche avec une surface intérieure (6a) d'un orifice ménagé dans ladite paroi et au moins une gorge longitudinale traversante (9) pour le passage dudit câble, ledit joint d'étanchéité:
- étant réalisé dans un matériau déformable ;
- comprenant une fente longitudinale (10) reliant une desdites surfaces périphériques (5a, 5b) à l'intérieur de ladite gorge (9) pour l'insertion dudit câble (12) à l'intérieur de la gorge (9);
- étant muni de moyens d'étanchéité (11) extérieurs à la gorge (9) pour assurer l'étanchéité entre la gorge (9) et le câble (12) lorsque ce dernier est installé dans la gorge (9),
- et **caractérisé par le fait que** lesdits moyens d'étanchéité comprennent une lèvre d'étanchéité transversale (11) en forme de languette ayant une première partie terminale (11a) solidaire du joint d'un côté de ladite fente (10) et une deuxième partie terminale libre (11b), une partie médiane (11 c) de ladite lèvre d'étanchéité (11), située entre ses parties terminales (11a, 11 b), recouvrant une section d'extrémité longitudinale de ladite fente (10) dans la zone où ladite fente (10) débouche dans la gorge (9).

2. Joint d'étanchéité (2) selon la revendication 1, **caractérisé par le fait que** ladite fente (10) présente, en l'absence de contraintes exercées sur le joint, une section transversale en V, évasée depuis la gorge (9) dans la direction de ladite surface périphérique (5a, 5b).

3. Joint d'étanchéité (2) selon l'une des revendications précédentes, **caractérisé par le fait que** ladite fente (10) débouche dans ladite gorge (9) sensiblement tangentiellement à la surface intérieure de la gorge (9).

4. Joint d'étanchéité (2) selon la revendication 3, **caractérisé par le fait que** ladite première partie terminale (11a) de la lèvre d'étanchéité (11) est solidaire du joint du côté de la gorge (9) opposé au côté où ladite fente (10) débouche dans la gorge (9).

5. Joint d'étanchéité (2) selon l'une des revendications 1 à 4, **caractérisé par le fait que** ladite lèvre d'étanchéité (11) est réalisée d'une seule pièce avec le joint.

6. Coffret électrique, **caractérisé par le** fait qu'il comprend un joint d'étanchéité (2) selon l'une des revendications précédentes disposé dans un orifice ménagé dans une de ses parois (3a, 3b).

7. Coffret électrique selon la revendication 6, **caractérisé par le** fait que ladite lèvre d'étanchéité (11) est disposée du côté de la section d'extrémité de ladite fente (10), extérieure au coffret.

## Patentansprüche

1. Dichtung (2) für die dichte Durchführung mindestens eines elektrischen Kabels (12) von einer Seite einer Wand (3a, 3b) zur anderen, umfassend Umfangsflächen (5a, 5b), die dicht in eine Innenfläche (6a) einer Öffnung eingreifen, die in der Wand ausgenommen ist, und mindestens eine durchgehende Längsrille (9) für die Durchführung des Kabels, wobei die Dichtung:
- aus einem verformbaren Material hergestellt ist,
- einen Längsschlitz (10) umfasst, der eine der Umfangsflächen (5a, 5b) mit dem Inneren der Rille (9) zum Einsetzen des Kabels (12) in das Innere der Rille (9) verbindet,
- mit Dichtungsmitteln (11) außerhalb der Rille (9) versehen ist, um die Dichtigkeit zwischen der Rille (9) und dem Kabel (12) zu gewährleisten, wenn dieses letztgenannte in der Rille (9) angeordnet ist,
- und **dadurch gekennzeichnet, dass** die Dichtungsmittel eine Querdichtlippe (11) in Form einer Zunge umfassen, die einen ersten Endteil (11 a), der mit der Dichtung auf einer Seite des Schlitzes (10) verbunden ist, und einen zweiten freien Endteil (11 b) aufweist, wobei sich ein Mittelteil (11 c) der Dichtlippe (11) zwischen ihren Endteilen (11 a, 11 b) befindet, der einen Längsendabschnitt des Schlitzes (10) in der Zone, in der der Schlitz (10) in die Rille (9) mündet, abdeckt.

2. Dichtung (2) nach Anspruch 1, **dadurch gekennzeichnet, dass** der Schlitz (10), wenn keine Spannungen auf die Dichtung ausgeübt werden, einen V-förmigen Querschnitt aufweist, der von der Rille (9) aus in Richtung der Umfangsfläche (5a, 5b) erweitert ist.

3. Dichtung (2) nach einem der vorhergehenden Ansprüche, **dadurch gekennzeichnet, dass** der Schlitz (10) in die Rille (9) im Wesentlichen tangential zur Innenfläche der Rille (9) mündet.

4. Dichtung (2) nach Anspruch 3, **dadurch gekennzeichnet, dass** der erste Endteil (11 a) der Dichtlippe (11) mit der Dichtung auf der Seite der Rille (9), die zu der Seite, auf der der Schlitz (10) in die Rille (9) mündet, entgegengesetzt liegend ist, verbunden ist.

5. Dichtung (2) nach einem der Ansprüche 1 bis 4, **dadurch gekennzeichnet, dass** die Dichtlippe (11) mit der Dichtung aus einem Stück ist.

6. Elektrokoffer, **dadurch gekennzeichnet, dass** er eine Dichtung (2) nach einem der vorhergehenden Ansprüche umfasst, die in einer Öffnung angeordnet ist, die in einer seiner Wände (3a, 3b) ausgenommen ist.

7. Elektrokofifer nach Anspruch 6, **dadurch gekennzeichnet, dass** die Dichtlippe (11) auf der Seite des Endabschnitts des Schlitzes (10) außerhalb des Koffers angeordnet ist.

## Claims

1. A sealing gasket (2) for passing at least one electric cable (12) in sealed manner from one side of a wall to another (3a, 3b), having peripheral surfaces (5a, 5b) for sealing engagement with an inside surface (6a) of an orifice made through said wall, and at least one through longitudinal groove (9) for passing said cable, said sealing gasket:
• being made of a deformable material;
• including a longitudinal slot (10) connecting one of said peripheral surfaces (5a, 5b) to the inside of said groove (9) for inserting said cable (12) inside the groove (9);
• being provided with sealing means (11) outside the groove (9) for providing sealing between the groove (9) and the cable (12) when the cable is installed in the groove (9); and
• **characterized by** the fact that said sealing means comprise a transverse sealing lip (11) in the form of a tongue having a first terminal portion (11a) secured to the gasket on one side of said slot (10) and a second terminal portion (11b) that is free, a middle portion (11c) of said sealing lip (11), situated between its terminal portions (11a, 11b), covering a longitudinal end section of said slot (10) in the zone where said slot (10) leads into the groove (9).

2. A sealing gasket (2) according to claim 1, **characterized by** the fact that, in the absence of stresses exerted on the gasket, said slot (10) presents a V-shaped cross-section flaring from the groove (9) towards said peripheral surface (5a, 5b).

3. A sealing gasket (2) according to one of the preceding claims, **characterized by** the fact that said slot (10) leads into said groove (9) substantially tangentially to the inside surface of the groove (9).

4. A sealing gasket (2) according to claim 3, **characterized by** the fact that said first terminal portion (11a) of the sealing lip (11) is secured to the gasket on the side of the groove (9) that is opposite from the side where the slot (10) leads into the groove (9).

5. A sealing gasket (2) according to any one of claims 1 to 4, **characterized by** the fact that said sealing lip (11) is made integrally with the gasket.

6. An electrical box, **characterized by** the fact that it includes a sealing gasket (2) according to any one of the preceding claims arranged in an orifice formed in one of its walls (3a, 3b).

7. An electrical box according to claim 6, **characterized by** the fact that said sealing lip (11) is arranged on the side of the end section of said slot (10) outside the box.
